# EUROPÄISCHE PATENTANMELDUNG

(11) **EP 2 499 918 A1**
(43) Veröffentlichungstag der Anmeldung: **19.09.2012**
(21) Anmeldenummer: 12405023.8
(22) Anmeldetag: 27.02.2012
(51) Int. Cl.: A21B 3/13

(54) **Backform**

(30) Priorität: 17.03.2011 CH 451112011
(71) Anmelder: Betty Bossi AG, 8002 Zürich (CH)
(72) Erfinder: Engler, Valentin, 8037 Zürich (CH)
(74) Vertreter: Gachnang, Hans Rudolf

(57) **Zusammenfassung**

Die Backform (1) umfasst eine erste Form (3) und eine zweite Form (5), welche durch zwei Halteringe (7,9) miteinander verbunden sind.

## Beschreibung

Gegenstand der Erfindung ist eine Backform gemäss Oberbegriff des Patentanspruchs 1.

Backformen sind in vielen Ausführungen bekannt und werden sowohl im Haushalt als auch in Gewerbebetrieben benutzt.

Eine Backform umfasst üblicherweise ein schalenförmiges Unterteil, welches den flüssigen, pastösen oder anderswie verformbaren, in einer Teigschüssel fertig zubereiteten Teig aufnehmen und während des Backens in Form halten und formgebend wirken kann. Backformen weisen ein Volumen auf, um den Teig zumindest während seiner flüssigen oder zähen Form aufzunehmen, diesen aber gegen oben nicht am "Aufgehen" hindern.

Beim herkömmlichen Backen, insbesondere nach eigenen Rezepten, d.h. ohne Fertigprodukte, erfolgt die Herstellung des Teigs unabhängig von der Backform und in separaten Gefässen und oft auch mit Teigrührmaschinen oder anderen Teigrührgeräten.

Eine Aufgabe der vorliegenden Erfindung besteht nun darin, eine Backform zu schaffen, bei der der Teig innerhalb der Backform herstellbar ist.

Eine weitere Aufgabe der Erfindung besteht darin, die Backform derart auszugestalten, dass in dieser unterschiedlich geformte Kuchen gebacken werden können.

Anhand eines illustrierten Ausführungsbeispiels wird die Erfindung näher erläutert. Es zeigen
- Figur 1: eine perspektivische Darstellung der Backform mit einer Schale und einem Deckel,
- Figur 2: eine Seitenansicht der Backform in Figur 1,

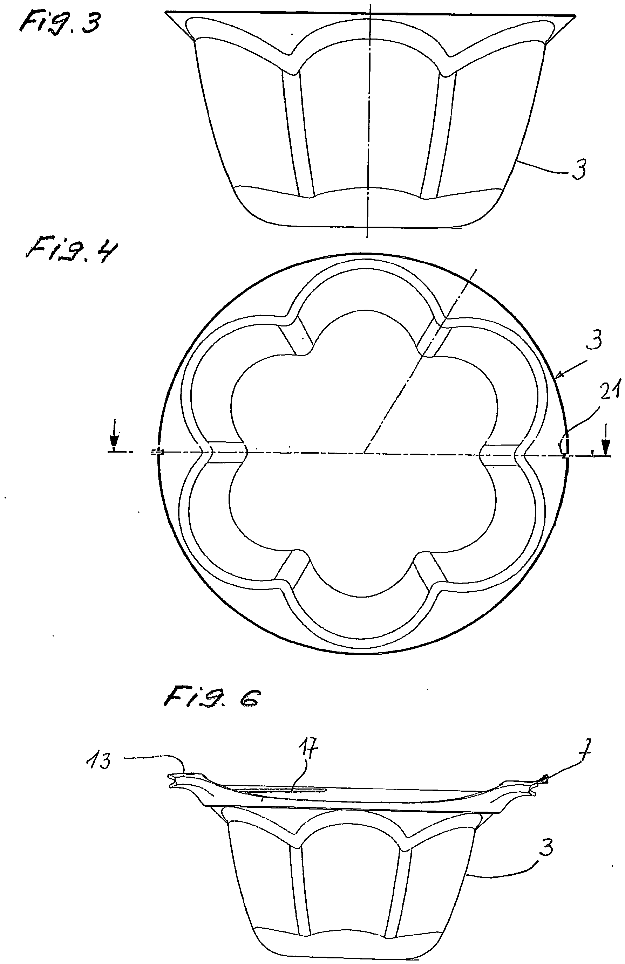

- Figur 3: eine Seitenansicht der Schale der Backform,
- Figur 4: eine Aufsicht auf die ungedeckte Schale gemäss Figur 3,

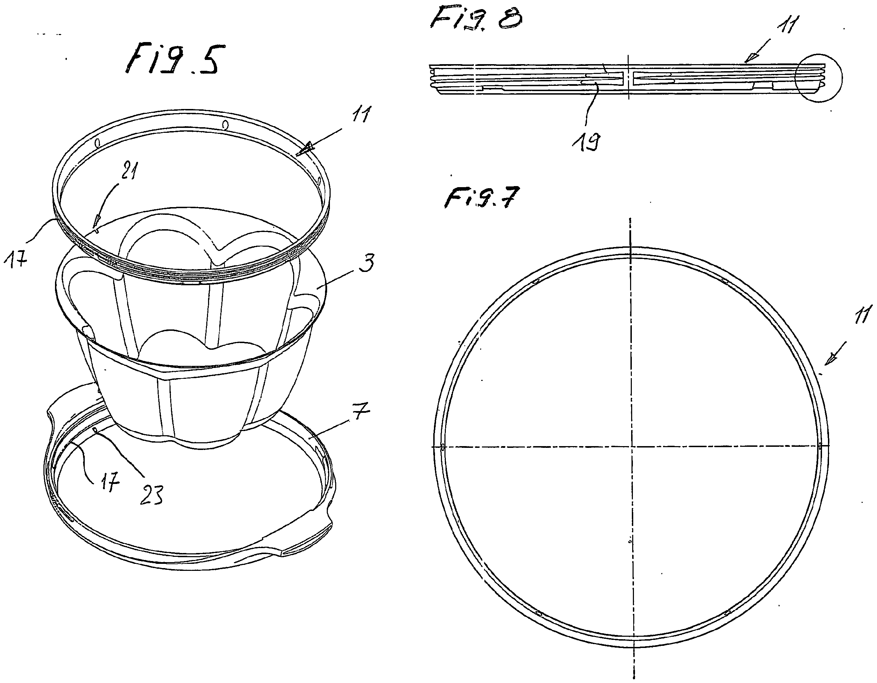

- Figur 5: eine Explosionszeichnung der Schale mit einem unteren Haltering und einem Verbindungsring,
- Figur 6: eine Seitenansicht der Schale mit dem unteren Haltering, Haltering an der Schale eingerastet,
- Figur 7: eine Aufsicht auf den Verbindungsring,
- Figur 8: eine Seitenansicht des Verbindungsrings,

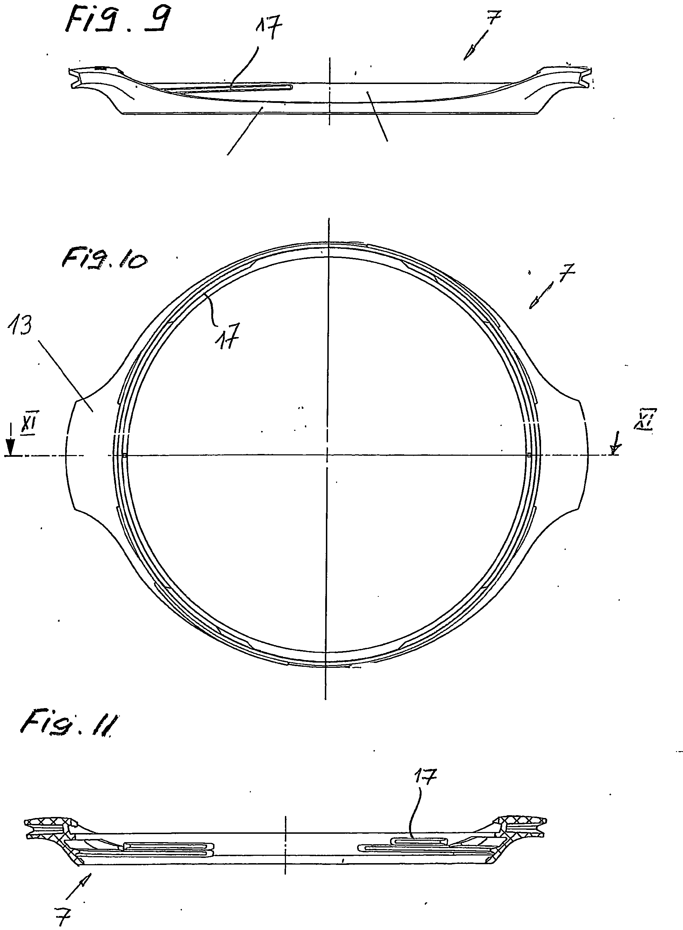

- Figur 9: eine Seitenansicht des unteren Haltering,
- Figur 10: eine Aufsicht auf den Haltering,
- Figur 11: einen Diagonalschnitt durch den Verbindungsring längs Linie XI - XI in Fig.10.

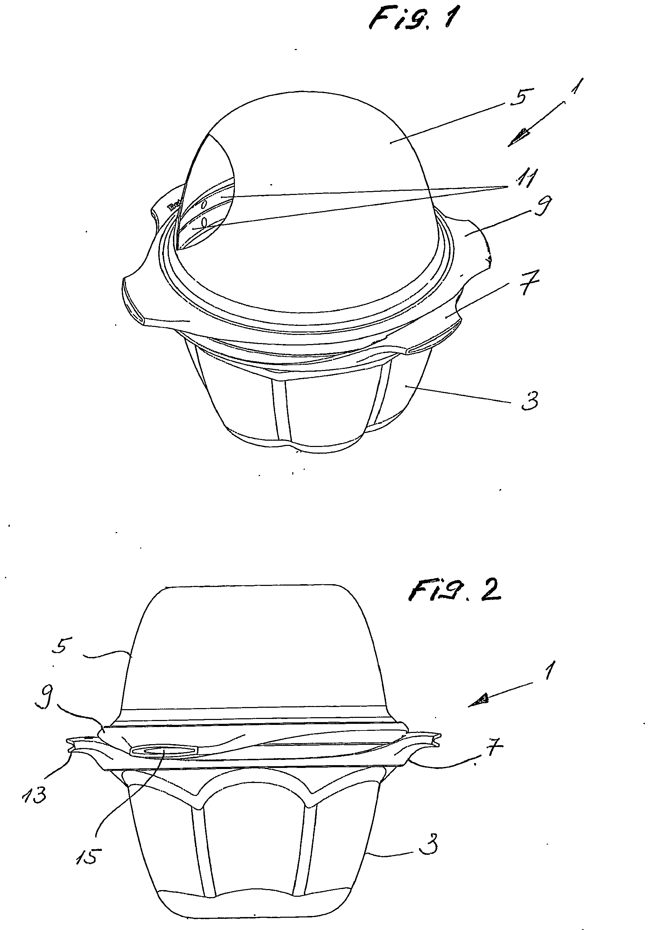

In den Figuren 1 und 2 ist mit Bezugszeichen 1 eine erfindungsgemässe Backform bezeichnet, umfassend eine erste Form 3, und eine zweite Form 5, einen von unten über die erste Form 3 geschobenen unteren Halte- oder Aussenring 7 und einen oberen Halte- oder Aussenring 9, die vorzugsweise identisch ausgebildet sind. In Figur 1 ist nur andeutungsweise sichtbar ein Innenring 11, mit welchem jeweils ein Aussenring 7 mit der ersten Form 3 verbunden wird. Der untere Haltering 7 und der obere Haltering 9 weisen einander gegenüberliegende Haltegriffe 13, 15 auf. Diese dienen dazu, die Halteringe 7, 9 gegeneinander zum Schliessen der beiden Formen 3, 5 zu verdrehen, sowie die Backform 1 beim Schütteln zu halten und zu tragen. Zu diesem Zweck weisen die beiden Halteringe 7, 9 im Innern Gewinde oder Gewindeabschnitte 17 auf. Diese Gewindeabschnitte 17 gelangen in Eingriff mit entsprechenden Gewinden bzw. Gewindeabschnitten 19 an der Peripherie des Innenrings 11.

Um ein Drehen des unteren Halterings 9 auf dem Rand der Schale 3 zu verhindern, sind am oberen Rand der Form 3 Einschnitte 21 ausgebildet, in die am unteren Haltering 17 angebrachte Nocken 23 eingreifen.

Nachfolgend wird das Zusammenfügen der ersten Form 3 und der zweiten Form 5 mit der Klemmanordnung, bestehend aus den beiden Halteringen 7, 9 und dem Innenring 11, kurz beschrieben. Der untere Aussenring oder Haltering 7 wird von unten über die erste Form 3 bis an deren oberen Rand hochgezogen und dort fixiert, bis die Nocken 23 in die Einschnitte 21 an der Schale einrasten. Danach wird der Innenring 11 aufgesetzt und durch eine Drehung mit dem Haltering 7 verbunden. Nach dem Einfüllen aller Zutaten des Kuchens bzw. für die Teigmasse in die erste Form 3 oder die zweite Form 5, wird die andere Form 3, 5 auf die erste Form 3 aufgelegt und mit dem oberen Haltering 9 durch eine Drehbewegung des letzteren mit dem unteren durch den Gewinde- oder Bajonettverschluss verbunden. Die Backform 1 ist nun vollständig geschlossen.

Nun können die in eine der Form eingefüllten Komponenten, z.B. flüssige Butter, Eier, Fettkomponente etc. und Mehl, Zucker und Nüsse in gemahlener Form, durch Schütteln zu einem Teig miteinander verbunden und vermischt werden. Der fertige Teig kann nun entweder in der ersten Form 3 oder in der zweiten Form 5 gebacken werden, nachdem die für das Schütteln und Vermischen der Teigzutaten zusammengesetzten beiden Formen 3, 5 getrennt worden sind.

Um ein Kleben des fertigen Teigs in einer der Formen 3, 5 zu verhindern, ist deren Innenfläche mit einer Beschichtung versehen, welche mit der Teigmasse keine Verbindung eingeht, so dass beim Trennen der beiden Schalen 3, 5 der Teig nur in der jeweils untenliegenden Schale verbleibt und in dieser ausgebacken werden kann.

## Patentansprüche

1. Backform (1), umfassend eine erste Form (3) mit einer Standfläche, einer Mantelfläche und einem umlaufenden Rand,
**dadurch gekennzeichnet, dass**
die erste Form (3) und eine auf die erste Form (3) aufsetzbare zweite Form (5) durch eine Klemmringanordnung miteinander verbindbar ausgebildet sind.

2. Backform nach Anspruch 1, **dadurch gekennzeichnet, dass** die Klemmringanordnung zwei je über die Mantelflächen der ersten Form (3) und der zweiten Form (5) schiebbare Aussen- oder Halteringe (7,9) und mindestens einen zwischen der ersten Form (3) und der zweiten Form (5) einlegbaren Innen- oder Verbindungsring (11) umfasst.

3. Backform nach Anspruch 2, **dadurch gekennzeichnet, dass** die Aussenringe (7,9) die Ränder der ersten Form (3) und der zweiten Form (5) untergreifen und mit dem mindestens einen Innenring (11) durch eine gegenseitige Drehung verbindbar sind.

4. Backform nach einem der Ansprüche 2 oder 3, **dadurch gekennzeichnet, dass** die Aussenringe (7,9) und der mindestens eine Innenring (11) durch an diesen Elementen angebrachte Gewinde oder Gewindeabschnitte (17,19) oder durch bajonettartige Verbindungsmittel verbindbar sind.

5. Backform nach einem der Ansprüche 2 bis 4, **dadurch gekennzeichnet, dass** an den Aussenringen (7,9) einander gegenüberliegende Haltegriffe (13,15) angeformt sind.

6. Backform nach einem der Ansprüche 1 bis 5, **dadurch gekennzeichnet, dass** die erste Form (3) und die zweite Form (5) eine gleiche oder eine unterschiedliche Raumform oder Gestalt aufweisen.

7. Backform nach einem der Ansprüche 1 bis 6, **dadurch gekennzeichnet, dass** die Aussenringe (7,9) gleichartig oder unterschiedlich ausgebildet sind.

8. Backform nach einem der Ansprüche 1 bis 7, **dadurch gekennzeichnet, dass** für die Verbindung der beiden Schalen (3,5) ein oder zwei Innenringe (11) eingesetzt werden.

9. Verwendung der Backform gemäss den Ansprüchen 1 bis 8 zum Schütteln der Teigzutaten zu einem backfertigen Teig und zum Backen des Teigs in einer der beiden Formen (3,5).
